# EUROPÄISCHE PATENTSCHRIFT

(11) **EP 2 792 467 B1**
(45) Veröffentlichungstag und Bekanntmachung des Hinweises auf die Patenterteilung: **21.09.2016**
(21) Anmeldenummer: 14154750.5
(22) Anmeldetag: 11.02.2014
(51) Int. Cl.: B29C 49/42, B65G 47/08, B65G 47/26, B65G 47/29

(54) **Vorrichtung und Verfahren zum Vereinzeln von Kunststoffbehältern**
Device and method for singulating plastic containers
Dispositif et procédé de séparation de récipients plastiques

(30) Priorität: 05.03.2013 DE 102013102171
(43) Veröffentlichungstag der Anmeldung: 22.10.2014
(73) Patentinhaber: Waldorf Technik GmbH & Co. KG, 78234 Engen (DE)
(72) Erfinder: Czizegg, Wolfgang, 78256 Steisslingen (DE); Fuhrmann, Ralf, 78234 Engen (DE)
(74) Vertreter: Wagner, Kilian

(56) Entgegenhaltungen:
- EP-A1- 1 136 400
- EP-A2- 2 218 662
- DE-A1- 3 144 449
- DE-A1-102005 026 639
- FR-A1- 2 566 888
- GB-A- 301 700
- US-A- 2 755 611
- US-A- 4 637 509
- US-A- 5 667 055

## Beschreibung

Die Erfindung betrifft eine Vereinzelungsvorrichtung gemäß Anspruch 1 zum Vereinzeln von auf einer Aufnahmefläche in Reihe anordenbaren Kunststoffbehältern sowie ein Vereinzelungsverfahren gemäß Anspruch 7.

Ein zeitkritischer Prozess bei der Herstellung und Handhabung von Kunststoffbehältern, insbesondere Kunststoffspritzgussbehältern besteht in der Vereinzelung von in einer Reihe angeordneten Kunststoffbehältern mit dem Ziel, die Kunststoffbehälter nach der Vereinzelung, d.h. nach einer definierten Beabstandung bzw. Relativpositionierung mittels eines Greifers aufnehmen und von einer, meist von einem Band gebildeten Aufnahmefläche abnehmen und dann weiterverarbeiten, insbesondere verpacken oder auf einem Tray anordnen zu können. Bekannte Vereinzelungsvorrichtungen weisen zu diesem Zweck in regelmäßigen Abständen angeordnete Vereinzelungselemente auf, die aus einer Position unterhalb der Aufnahmefläche in einer Schrägbewegung nach oben in die Kunststoffbehälter hinein gegen deren Innenumfangswand verstellt werden können, um die Kunststoffbehälter gleichmäßig bzw. definiert zu beabstanden. Nachteilig hierbei ist, dass die Kunststoffbehälter bei einem Kontakt mit den Vereinzelungselementen mit einer Kraftkomponente senkrecht zur Flächenerstreckung der Aufnahmefläche beansprucht werden, was dazu führen kann, dass Kunststoffbehälter von der Aufnahmefläche abgehoben und im Extremfall umgeworfen werden.

Nachteilig ist zudem, dass die Kunststoffbehälter je nach Relativposition zu den Vereinzelungselementen durch den Vereinzelungsimpuls zu stark beschleunigt werden, was in einer nicht definierten Endlage der Kunststoffbehälter resultieren kann.

Ferner ist es mit bekannten Systemen nur schwer möglich, ovale Kunststoffbehälter zu vereinzeln, da diese durch Beaufschlagung mit den schräg verfahrbaren Vereinzelungselementen nicht definiert ausgerichtet werden, wodurch eine achsparallele Anordnung nicht in jedem Fall sicher gestellt ist, was Probleme bei der Aufnahme mit einem entsprechenden Greifer mit sich bringen kann.

Entscheidend ist generell, dass der Vereinzelungsprozess schnell erfolgt, da nur neue Kunststoffbehälter in die Vereinzelungsvorrichtung nachgefördert werden können, wenn diese nach erfolgter Vereinzelung wieder mittels eines Greifers entleert wurde.

DE 3 144 449 A1 beschreibt eine gattungsgemäße Vorrichtung.

Ausgehend von dem vorgenannten Stand der Technik liegt der Erfindung die Aufgabe zu Grunde eine robuste, möglichst einfach aufgebaute und vor allen Dingen schnell arbeitende Vereinzelungsvorrichtung sowie ein entsprechendes Vereinzelungsverfahren für in einer Reihe angeordnete Kunststoffbehälter anzugeben. Dabei soll die Vorrichtung derart ausgebildet sein, dass die Kunststoffbehälter in eine definierte Position verstellbar sind. Besonders bevorzugt soll die Vereinzelungsvorrichtung bzw. soll das Vereinzelungsverfahren zum Vereinzeln von nichtrotationssymmetrischen, insbesondere eine ovale Umfangskontur aufweisenden Kunststoffbehältern geeignet sein.

Diese Aufgabe wird hinsichtlich der Vereinzelungsvorrichtung mit den Merkmalen des Anspruchs 1 und hinsichtlich des Vereinzelungsverfahrens mit den Merkmalen des Anspruchs 7 gelöst. Vorteilhafte Weiterbildungen der Erfindung sind in den Unteransprüchen angegeben. Zur Lösung der der Erfindung zugrunde liegenden Aufgabe führt eine Anzahl von kumulativ zu verwirklichenden Merkmalen. Zunächst ist es zur Minimierung des apparativen Aufbaus und zur gleichzeitigen Geschwindigkeitsoptimierung vorzusehen, die ersten Vereinzelungselemente nicht in aufeinander folgenden Einzelbewegungen senkrecht sowie parallel zur Aufnahmefläche zu verstellen, sondern diese Bewegungsrichtungen zumindest abschnittsweise, insbesondere ausschließlich abschnittsweise in einer gemeinsamen, kombinierten rotatorischen sowie translatorischen Verstellbewegung zu realisieren, die ein Eintauchen in die, vorzugsweise becherförmigen, Kunststoffbehälter (senkrechte Bewegungskomponente) sicher stellt und gleichzeitig gewährleistet, dass die Kunststoffbehälter in Richtung der Reihenerstreckung auseinander gezogen werden, d.h. auf der Aufnahmefläche verstellt werden (parallele Bewegungskomponente), wobei die parallele Bewegungskomponente, wie später noch erläutert werden wird, bevorzugt in einem Endabschnitt der Bewegung der ersten Vereinzelungselemente als zumindest näherungsweise rein translatorische Bewegung realisiert ist. Die kombinierte rotatorische sowie translatorische Bewegung kann beispielsweise, wie später noch erläutert wird, dadurch realisiert werden, dass den ersten Vereinzelungselementen ein Kurbeltrieb und eine insbesondere in einer Kurbelscheibe vorgesehene Führungskulisse zugeordnet ist, die dafür Sorge tragen, dass die ersten Vereinzelungselemente gleichzeitig parallel relativ zur Aufnahmefläche sowie senkrecht zur Aufnahmefläche in einer kombinierten rotatorischen sowie translatorischen Verstellbewegung bewegt werden. Als weitere erfindungswesentliche Maßnahme zur Optimierung bzw. Normierung des Vereinzelungs-, d.h. Beabstandungsprozesses ist vorgesehen, dass jedem Kunststoffbehälter mindestens ein Paar von Vereinzelungselementen (d.h. mindestens zwei zusammengehörige und entlang der Reihenerstreckung voneinander beabstandeten Vereinzelungselemente) zugeordnet ist, wobei ein Paar von Vereinzelungselementen neben einem zuvor beschriebenen ersten Vereinzelungselement noch ein zweites Vereinzelungselement umfasst. Dabei ist weiter vorgesehen, dass die ersten Vereinzelungselemente relativ zu den zweiten Vereinzelungselementen entlang der Reihenerstreckung der Kunststoffbehälter, d.h. entlang der Längserstreckung der Aufnahmefläche verstellbar sind, sodass die Kunststoffbehälter durch Kraftbeaufschlagung mittels der ersten Vereinzelungselemente gegen die dann ein Widerlager bildenden zweiten Vereinzelungselemente gezogen werden können, wodurch eine definierte Endposition jedes einzelnen Kunststoffbehälters und damit eine definierte Relativposition der Kunststoffbehälter zueinander sichergestellt wird, um in der Folge zu gewährleisten, dass ein nachfolgend die Kunststoffbehälter aufnehmender Mehrfachgreifer die Kunststoffbehälter störungsfrei in ihrer definierten Position aufnehmen und von der Aufnahmefläche abnehmen kann. Durch das Vorsehen der paarweise angeordneten Vereinzelungselemente wird also die Störanfälligkeit des Vereinzelungsprozesses reduziert und damit die Gesamtgeschwindigkeit des Vereinzelungsprozesses erhöht, was wesentlich ist für diesen zeitkritischen Handhabungsschritt, insbesondere bei der Anordnung einer erfindungsgemäßen Vereinzelungsvorrichtung im Rahmen einer Herstellungsvorrichtung zur Herstellung der Kunststoffbehälter, beispielsweise durch Spritzgießen oder Tiefziehen.

In Weiterbildung der Erfindung ist mit Vorteil vorgesehen, dass die Antriebsmittel derart ausgebildet sind, dass die Kunststoffbehälter möglichst keine oder allenfalls eine nur geringe Kraftkomponente senkrecht zur Flächenerstreckung der Aufnahmefläche erfahren, was weiterbildungsgemäß dadurch umgesetzt ist, dass die ersten Vereinzelungselemente in einem letzten Vereinzelungs-Bewegungsschritt ihrer Vereinzelungsbewegung im Wesentlichen nur parallel zur Aufnahmefläche verstellbar sind, dass also eine Schrägbewegung oder Bewegungskomponente senkrecht zur Flächenerstreckung der Aufnahmefläche in dem letzten Bewegungsschritt, in welchem sie an den Kunststoffbehältern anliegen, zumindest weitgehend, unterbleibt. Mechanisch gelöst werden kann dies beispielsweise über eine Kulissenführung die so ausgestaltet ist, dass insbesondere in einem ersten Bewegungsabschnitt die rotative Bewegungskomponente überwiegt während in dem letzten Bewegungsschritt im Wesentlichen nur noch eine tranlatorische Bewegung der ersten Vereinzelungselemente parallel zur Aufnahmefläche, insbesondere in Richtung der Längserstreckung der Aufnahmefläche erfolgt. So kann die beispielsweise in einer Kurbelscheibe vorgesehene Führungskulisse zur Realisierung einer kombinierten translatorischen sowie rotatorischen Bewegung der ersten Vereinzelungselemente in einem ersten Abschnitt spiralförmig ausgebildet sein, d.h. einen sich über ihre Erstreckung verändernden Krümmungsradius aufweisen und insbesondere in einem letzten Abschnitt kreisbogenförmig, d.h. mit einem konstanten Radius ausgestaltet sein.

Besonders bevorzugt ist es, wenn auch die zweiten Vereinzelungselemente senkrecht zur Flächenerstreckung der Aufnahmefläche antreibbar sind, damit auch die zweiten Vereinzelungselemente in die Kunststoffbehälter eintauchen können. Noch weiter bevorzugt ist es dabei, wenn zu diesem Zweck keine separaten Antriebsmittel vorgesehen sind, sondern wenn die zweiten Vereinzelungselemente mit den den ersten Vereinzelungselementen zugeordneten Antriebsmitteln verstellbar sind. Dies wird dadurch konstruktiv gelöst, dass die ersten Vereinzelungselemente auf einen Trägerschlitten angeordnet sind, auf den die Antriebsmittel, insbesondere mittels eines Kurbeltriebs einwirken, wobei der Trägerschlitten wiederum relativ verstellbar geführt ist an einer die zweiten Vereinzelungselemente tragenden Trägerstruktur, wobei die Lagerung vorzugsweise derart ausgebildet ist, dass der Trägerschlitten relativ zur Trägerstruktur parallel zur Aufnahmefläche und noch weiter bevorzugt in Richtung von deren Längserstreckung verstellbar ist. Dabei ist es besonders bevorzugt, wenn die Antriebsmittel zur Betätigung des Kurbeltriebs, genauer einer Kurbelscheibe an der Trägerstruktur festgelegt sind, sodass die Antriebsmittel sowie die Kurbelscheibe zusammen mit der Trägerstruktur durch eine Verdrehbewegung der Kurbelscheibe vertikal verfahren. Dabei ist es besonders zweckmäßig, wenn in der Kurbelscheibe eine die Bewegung steuernde Führungskulisse eingebracht ist, in die ein feststehender Fortsatz, insbesondere eine ortsfest angeordnete Kulissenrolle eingreift relativ zu der die Führungskulisse, d.h. die Kurbelscheibe abrollt. Selbstverständlich können Führungskulisse und Kurbelscheibe auch als separate, insbesondere drehfest ineinander angeordnete Bauteile ausgebildet sein. Bei dem Abrollen der Führungskulisse relativ zu der feststehenden Kurbelrolle führt dann die Trägerstruktur eine translatorische Vertikalbewegung, wobei hierbei auch eine Antriebswelle des Antriebs, über die die Führungskulisse bzw. die Kurbelscheibe angetrieben wird eine Vertikalbewegung ausführt. Damit die Trägerstruktur eine definierte Vertikalbewegung ausführt, ist weiterbildungsgemäß vorgesehen, dass diese translatorisch verstellbar, insbesondere verschiebbar geführt ist, wobei hierzu eine entsprechende Lagerung, insbesondere eine Gleitführung an einem Grundgestell der Vereinzelungsvorrichtung vorgesehen sein kann, wobei dieses Grundgestell bevorzugt den Eingriff bzw. Fortsatz bzw. die Führungsrolle trägt, gegenüber der die Führungskulisse abrollt. Wie im Vorfeld schon diskutiert kann über die Form der Führungskulisse, insbesondere einer Führungsnut die Bewegung beeinflusst werden, wobei bevorzugt in einem ersten Bewegungsabschnitt die Bewegung von einem Führungskulissenabschnitt beeinflusst wird, bei welchem sich der Krümmungsradius ändert, wohingegen insbesondere in einem letzten Bewegungsschritt die Bewegung bevorzugt von einem teilkreisförmigen Abschnitt der Führungskulisse beeinflusst wird. Wichtig ist noch zu erwähnen, dass die Verbindung zwischen der Kurbelscheibe und dem die ersten Vereinzelungselemente tragenden Schlitten bevorzugt über eine vorerwähnte Kurbel realisiert ist.

Je nach Anordnung der Kunststoffbehälter können die ersten und zweiten Vereinzelungselemente von oben oder unten in die Kunststoffbehälter eintauchen, wobei zweckmäßig eine Ausgestaltung der Vereinzelungsvorrichtung ist, bei der dieses Eintauchen von unten her realisiert ist, wozu die Antriebsmittel und die Paare von ersten und zweiten Vereinzelungselementen in einer Parkposition während die Kunststoffbehälter in die Vereinzelungsvorrichtung transportiert werden unterhalb der, beispielsweise von mindestens einem Förderband gebildeten Aufnahmefläche angeordnet sind.

Um gemäß einer besonders bevorzugten Ausgestaltung der Vereinzelungsvorrichtung bzw. Ausführung des Vereinzelungsverfahrens auch nicht rotationssymmetrische, insbesondere eine ovale Innenumfangskontur aufweisende Kunststoffbehälter definiert vereinzeln zu können, ist in Weiterbildung der Erfindung mit Vorteil vorgesehen, dass den Kunststoffbehältern jeweils zwei Paare von ersten und zweiten Vereinzelungselementen zugeordnet sind, wobei die beiden Paare quer zur Längserstreckung der Aufnahmefläche, d.h. quer zur Längserstreckung der Kunststoffbehälterreihe beabstandet angeordnet sind, wobei die ersten Vereinzelungselemente der beiden Paare gemeinsam kombiniert rotatorisch sowie translatorisch verstellbar sind, um hierdurch die gegebenenfalls beim Transport aus der Längsachse gelangten Kunststoffbehälter wieder auszurichten und somit eine definierte Vereinzelungs- bzw. Beabstandungslage sicher zu stellen. Dabei ist es ganz besonders bevorzugt, wenn die ersten und/oder zweiten Vereinzelungselemente der beiden Paare auf der gleichen Position bezogen auf die Längserstreckung der Aufnahmefläche angeordnet sind. Dies bedeutet, dass sich also die ersten Vereinzelungselemente einerseits und/oder die zweiten Vereinzelungselemente andererseits der gleichen Höhe entlang der Längserstreckung der Kunststoffbehälterreihe befinden, also die Ecken eines gedachten Rechteckes begrenzen, dessen Längsseiten parallel zur Längserstreckung der Aufnahmefläche verlaufen.

Bei einer alternativen Ausführungsform sind nicht zwei parallele Reihen von Paaren von ersten und zweiten Vereinzelungselementen vorgesehen, sondern eine einzige Reihe von ersten und zweiten Vereinzelungselementen, die vorzugsweise mittig im Bezug auf die Breitenerstreckung der Aufnahmefläche angeordnet sind, wobei in diesem Fall die Aufnahmefläche bevorzugt gebildet wird von zwei parallelen, voneinander beabstandeten Förderbändern, zwischen denen heraus, vorzugsweise von unten nach oben die ersten und zweiten Vereinzelungselemente in die Kunststoffbehälter hinein auftauchen können.

Wie im Vorfeld bereits erwähnt ist, ist es besonders zweckmäßig, wenn den ersten Vereinzelungselementen zur Realisierung der kombinierten rotatorischen sowie translatorischen Verstellbewegung ein Kurbeltrieb zugeordnet ist, den wiederum eine Führungskulisse zugeordnet ist, die die resultierende Bewegung vorgibt, wobei hierdurch entsprechende Ausgestaltung der Führungskulisse bevorzugt realisiert ist, dass in einen Endabschnitt der Bewegung im Wesentlichen nur noch eine translatorische Bewegungskomponente vorherrscht. Im Hinblick auf die Aktuierung des Kurbeltriebs gibt es unterschiedliche Möglichkeiten. So kann hierfür bei Bedarf wiederum ein mittels eines pneumatischen Kolbenzylinderantriebs antreibbarer Kurbeltrieb vorgesehen sein oder alternativ ein pneumatischer Rotationskolben. Andere, auch elektromechanische Antriebe sind alternativ realisierbar. Besonders bevorzugt ist es dabei, wenn die Führungskulisse zusammen mit einem Antrieb für die Führungskulisse fest angeordnet ist an einer Trägerstruktur für die zweiten Vereinzelungselemente, wobei diese Trägerstruktur bevorzugt ausschließlich translatorisch verstellbar geführt ist, insbesondere in vertikaler Richtung und wobei ein die ersten Vereinzelungselemente tragender Trägerschlitten senkrecht hierzu translatorisch relativ zu der Trägerstruktur bewegbar gelagert ist, wobei diese translatorische Bewegung des Trägerschlittens durch eine Kurbel aktuiert ist, die an einer Kurbelscheibe angelenkt ist, die vorzugsweise gemeinsam mit der Führungskulisse von dem Antrieb aktuiert ist bzw. die besonders bevorzugt die Führungskulisse beinhaltet.

Die Erfindung führt auch auf ein Vereinzelungsverfahren zum Vereinzeln von auf einer Aufnahmefläche in Reihe angeordneten Kunststoffbehältern, insbesondere unter Verwendung einer nach dem Konzept der Erfindung ausgebildeten Vereinzelungsvorrichtung, wobei das Vereinzelungsprinzip darin besteht, dass erste Vereinzelungselemente relativ zur zweiten Vereinzelungselementen parallel zur Längserstreckung der Kunststoffbehälterreihe verstellt werden und gleichzeitig die Verstellbewegung der ersten Vereinzelungselemente relativ zu den Kunststoffbehältern in einer kombinierten, d.h. gleichseitig rotatorischen sowie translatorischen Bewegung erfolgt, wobei durch die Relativbewegung der Vereinzelungselemente die Kunststoffbehälter relativ zueinander verstellt und vereinzelt sind, d.h. definiert voneinander beabstandet werden.

Erfindungsgemäß ist nun vorgesehen, dass die zweiten Vereinzelungselemente jeweils ein Widerlager für die Kunststoffbehälter bilden, gegen welches die Kunststoffbehälter durch Kraftbeaufschlagung mittels der ersten Vereinzelungselemente gefördert werden.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig.1: eine Seitenansicht einer bevorzugten Ausführungsform einer nach dem Konzept der Erfindung ausgebildeten Vereinzelungsvorrichtung, wobei in Fig. 1 zwei unterschiedliche Verstellpositionen der Paare von ersten und zweiten Vereinzelungselementen dargestellt ist,
- Fig. 1a: eine vergrößerte Ansicht eines Details A aus Fig. 1,
- Fig. 2: eine Draufsicht auf die Vorrichtung gemäß Fig. 1,
- Fig. 2a: ein vergrößertes Detail B aus Fig. 2,
- Fig. 3: eine um 90° gedrehte Ansicht der Vorrichtung verglichen mit Fig. 1,
- Fig. 4: eine perspektivische Ansicht der Vereinzelungsvorrichtung gemäß den Fig. 1 bis 3,
- Fig. 5: eine perspektivische Darstellung der Vereinzelungsvorrichtung gemäß den Fig. 1 bis 4, wobei zur Verdeutlichung der Funktionsweise eine Reihe von Paaren von ersten und zweiten Vereinzelungselementen nicht gezeigt ist,
- Fig. 6: ein Detail A aus Fig. 5 in vergrößerter Darstellung,
- Fig. 7: eine Seitenansicht einer alternativen Vereinzelungsvorrichtung bei der pro Kunststoffbehälter ausschließlich zwei mittige Vereinzelungselemente vorgesehen sind,
- Fig. 8: eine Schnittansicht entlang der Schnittlinie A-A gemäß Fig. 7,
- Fig. 8a: ein Detail B aus Fig. 8, und
- Fig. 9: eine perspektivische Darstellung einer kombinierten Kurbelscheibe und Führungskulisse für sämtliche vorhergehenden Ausführungsbeispiele.

In den Figuren sind gleiche Elemente und Elemente mit der gleichen Funktion mit den gleichen Bezugszeichen gekennzeichnet.

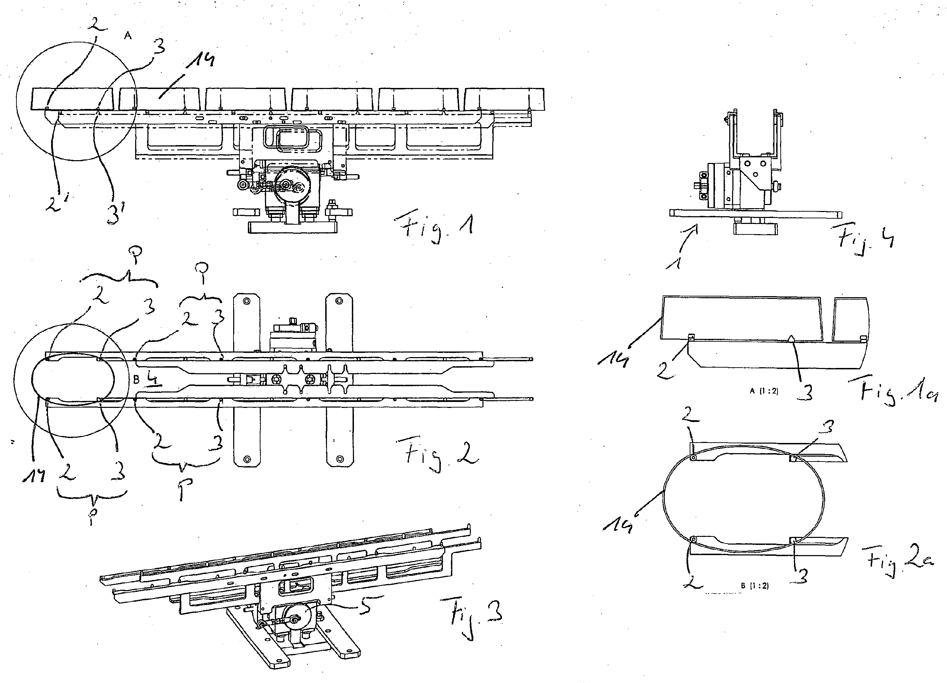

In den Fig. 1 bis 6 ist eine Vereinzelungsvorrichtung 1 oder Details hiervon gezeigt. Die Vereinzelungsvorrichtung umfasst, wie sich beispielsweise aus einer Draufsicht gemäß Fig. 2 ergibt, paarweise angeordnete erste Vereinzelungselemente 2 und zweite Vereinzelungselemente 3, wobei jedem Kunststoffbehälter 14 zwei einander gegenüberliegende Paare P von ersten und zweiten Vereinzelungselementen 2, 3 zugeordnet sind. Wie insbesondere den Figuren 2 und 2a zu entnehmen ist, weisen die becherförmigen Kunststoffbehälter eine ovale Innenkontur auf, die an vier, ein gedachtes Rechteck begrenzenden Stellen von zwei Paaren von ersten und zweiten Vereinzelungselementen 2, 3 geführt wird, wie später noch erläutert werden wird.

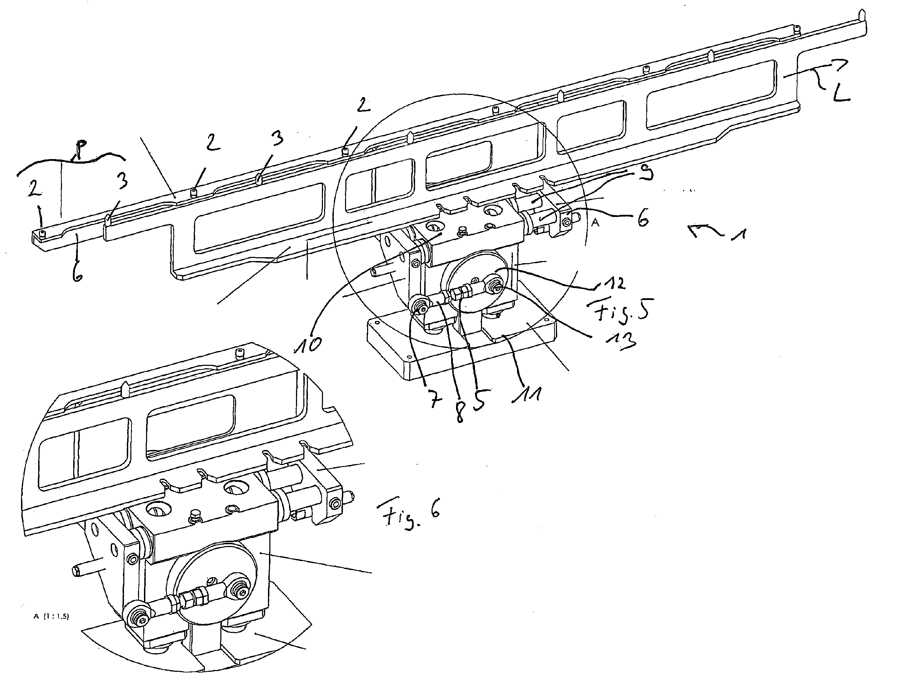

Wie sich insbesondere aus Fig. 2 ergibt, sind zwei parallele Reihen von Paaren P vorgesehen, wobei, wie erwähnt, die jeweils quer zur Längserstreckung der Aufnahmefläche gegenüberliegenden Paare einem Kunststoffbehälter 14 zugeordnet sind. Zwischen den Paarreihen befindet sich eine Lücke 4, in der ein Förderband oder dergleichen als Aufnahmefläche für die in Reihe anzutransportierenden Kunststoffbehälter aufgenommen werden kann. Unabhängig von der Ausgestaltung dieser Aufnahmefläche ist es wesentlich, dass die Fläche die Anordnung der Kunststoffbehälter hintereinander in einer Reihe in Richtung der Längserstreckung L der Vorrichtung bzw. der Aufnahmefläche ermöglicht. Die ersten und zweiten Vereinzelungselemente 2, 3 können bei der gezeigten Ausführungsform aus einer Position unterhalb der Aufnahmefläche, d.h. aus einer Parkposition, in der ein Transport der Kunststoffbehälter in der Pfeilrichtung L möglich ist in eine Position oberhalb der Aufnahmefläche verstellt werden, wobei diese Verstellbewegung betreffend die ersten Vereinzelungselemente 2 in einer kombinierten rotatorischen sowie translatorischen Bewegung realisiert ist, wie später noch anhand der Figuren 5 und 6 erläutert werden wird. Gleichzeitig sind die ersten und zweiten Vereinzelungselemente 2, 3 relativ zueinander entlang der Längsachse L verstellbar, um hierdurch die Kunststoffbehälter definiert auszurichten bzw. definiert zueinander zu positionieren.

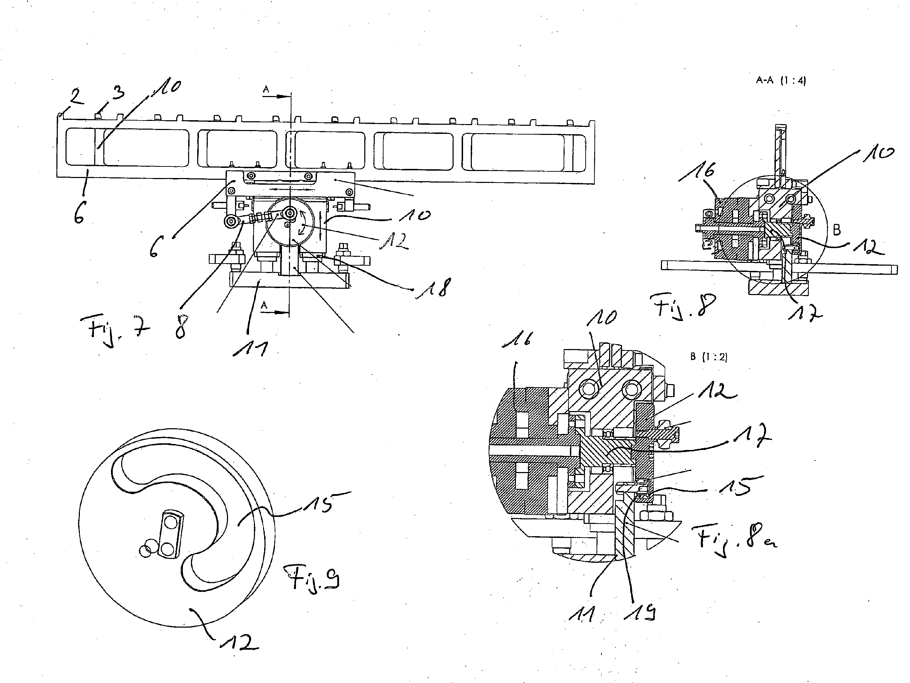

Zur Realisierung der kombinierten rotatorischen sowie translatorischen Bewegung der ersten Vereinzelungselemente 2 ist ein Kurbeltrieb 5 mit einer im Detail in Fig. 9 dargestellten Führungskulisse 15 vorgesehen.

In Fig. 1 sind die beiden Extrempositionen der ersten und zweiten Vereinzelungselemente gezeigt, wobei die Vereinzelungselemente in einer Parkposition unterhalb der Aufnahmefläche für die Kunststoffbehälter mit den Bezugszeichen 2' bzw. 3' und in der Stellposition mit 2 und 3 gekennzeichnet sind. Zu erkennen ist, dass die ersten und zweiten Vereinzelungselemente 2', 3' der Paare P in der Parkposition bezogen auf die Längserstreckung L näher beieinander angeordnet sind, als in der in der Zeichnungsebene nach oben verstellten Verstellposition, in welcher die Kunststoffbehälter ausgerichtet sind und mittels der ersten Vereinzelungselemente 2 gegen die dann ein Widerlager bildenden zweiten Vereinzelungselemente 3 gefördert sind. Die zweiten Vereinzelungselemente 3 vollführen bei Ihrer Verstellbewegung aus der Parkposition in die Verstellposition ausschließlich eine translatorische Bewegung senkrecht zur Flächenerstreckung der Aufnahmefläche, während die ersten Vereinzelungselemente 2' bzw. 2 sowohl senkrecht zur Flächenerstreckung der Aufnahmefläche als auch in Richtung der Längserstreckung L der Aufnahmefläche verstellt werden und dies in einer kombinierten rotatorischen sowie translatorischen Verstellbewegung, die über den in den Fig. 5 und 6 gezeigten Kurbeltrieb mit seiner Führungskulisse vorgegeben wird.

Wie sich aus den Fig. 4 und 5 ergibt, sind die ersten Vereinzelungselemente 2 auf einem Trägerschlitten 6 angeordnet, an dem an der Zeichnungsebene linkes Ende 7 des Kurbeltriebs 5, genauer einer Kurbelstange 8 gelenkig angreift.

Der Trägerschlitten 6 ist translatorisch verstellbar geführt über beispielhaft ein Paar von Führungsstangen 9 an einer Trägerstruktur 10, die die zweiten Vereinzelungselemente trägt. Diese Trägerstruktur 10 ist wiederum translatorisch verstellbar gelagert an einem Grundgestell der Vereinzelungsvorrichtung 1, was dazu führt, dass bei einer Rotationsbewegung einer Kurbelscheibe 12 (die drehfest verbunden ist mit einem Führungskulissenbauteil oder die selbst ein Führungskulissenbauteil bildet), an welcher das in der Zeichnungsebene rechte Ende 13 der Kurbelstange 8 angelenkt ist, der Trägerschlitten 6 parallel zur Längserstreckung L der Aufnahmefläche verstellt wird, während gleichzeitig eine Bewegung der Trägerstruktur 10 senkrecht zur Flächenerstreckung der Aufnahmefläche erfolgt und im Ergebnis die ersten Vereinzelungselemente 1 eine kombinierte translatorische sowie rotatorische Bewegung vollführen während die zweiten Vereinzelungselemente 3 lediglich senkrecht zur Flächenerstreckung der Aufnahmefläche verstellt werden.

Die Kurbelscheibe 12 ist in dem gezeigten Ausführungsbeispiel von einem nicht im gezeigten pneumatischen Rotationskolben rotierbar, wobei hier auch alternative Antriebe umsetzbar sind. Der Antrieb, in dem gezeigten Ausführungsbeispiel der Rotationskolben, ist in den Fig. 8 und Fig. 8a gezeigt und mit dem Bezugszeichen 16 gekennzeichnet. Der Antrieb 16 ist, wie sich aus einer Zusammenschau der Fig. 7-Fig. 8a ergibt fixiert an der Trägerstruktur 10, die die zweiten Vereinzelungselemente 3 trägt, sodass eine Antriebswelle 17, die drehfest mit der die Führungskulisse 15 beinhaltenden Kurbelscheibe 12 verbunden ist bei einer Drehbewegung der Kurbelscheibe 12 zusammen mit der Kurbelscheibe 12 und dem Antrieb 16 sowie der Trägerstruktur 10 eine translatorische Bewegung, in dem gezeigten Ausführungsbeispiel in vertikaler Richtung ausführt. Zu diesem Zweck ist die Trägerstruktur 10 über Führungen 18 translatorisch relativ zu dem Grundgestell 11 geführt. Der Trägerschlitten 6 wiederum, der translatorisch senkrecht relativ zu der Trägerstruktur 10 an dieser geführt ist wird über die Kurbelstange 8 angetrieben, die zum einen gelenkig verbunden ist mit der Kurbelscheibe 12 und zum anderen mit dem Trägerschlitten 6.

Die Anordnung führt dazu, dass sowohl die Trägerstruktur 10 als auch der Trägerschlitten 6 translatorische Bewegungen ausführen. Die Bewegungsbahn, die dabei die ersten Vereinzelungselemente 2 ausführen ist in etwa der ersten Hälfte der Bewegung kombiniert translatorisch rotatorisch.

Bei dem Ausführungsbeispiel gemäß den Figuren 7-8a ist im Gegensatz zu dem Ausführungsbeispiel gemäß den Figuren 1-6 lediglich eine einzige Reihe von Paaren von ersten und zweiten Vereinzelungselementen 2, 3 vorgesehen, die zentrisch angeordnet sind bezogen auf die Breitenerstreckung der Aufnahmefläche, die bei einer derartigen Ausführungsform bevorzugt gebildet wird von zwei Förderbändern, die rechts und links der Reihe von ersten und zweiten Vereinzelungselementen verlaufen.

Aus Fig. 8 ist die Wirkweise der Führungskulisse 15 zu entnehmen. In diese greift eine Kulissenrolle 19 (Fortsatz) ein, die fest an dem Grundgestell angeordnet ist. Bei einer Rotationsbewegung der Kurbelscheibe 12, die aktuiert ist über den drehfest mit dieser verbundenen Antrieb stützt sich die Kurbelscheibe 12 an der ortsfest angeordneten Kulissenrolle 19 ab und über die Antriebswelle 17 wird die daraus resultierende Hubkraft übertragen auf die Trägerstruktur 10 an der Antrieb 16 und Kurbelscheibe 12 mit Führungskulisse 15 festgelegt sind.

### Bezugszeichenliste

- 1: Vereinzelungsvorrichtung
- 2: erste Vereinzelungselemente
- 3: zweite Vereinzelungselemente
- 4: Lücke bzw. Aufnahmefläche
- 5: Kurbeltrieb
- 6: Trägerschlitten
- 7: linkes Ende einer Kurbelstange
- 8: Kurbelstange
- 9: Führungsstangen
- 10: Trägerstruktur
- 11: Grundgestell
- 12: Kurbelscheibe
- 13: rechtes Ende der Kurbelstange
- 14: Kunststoffbehälter
- 15: Führungskulisse
- 16: Antrieb
- 17: Antriebswelle
- 18: Führung
- 19: Kulissenrolle
- P: Paare von Vereinzelungselementen
- L: Längserstreckung der Aufnahmefläche

## Patentansprüche

1. Vereinzelungsvorrichtung zum Vereinzeln von auf einer Aufnahmefläche in Reihe anordnenbaren Kunststoffbehältern, wobei eine Vielzahl von paarweise angeordneten ersten und zweiten Vereinzelungselementen (2, 3) vorgesehen sind und wobei den ersten Vereinzelungselementen (2) der Paare (P) Antriebsmittel zugeordnet sind, um die ersten Vereinzelungselemente (2) relativ zu den zweiten Vereinzelungselementen (3) zu verstellen, um die Kunststoffbehälter relativ zueinander entlang der Aufnahmefläche zu verstellen und dadurch zu vereinzeln, wobei die Antriebsmittel derart ausgebildet sind, dass mit diesen die ersten Vereinzelungselemente (2) unterschiedlicher Paare (P) in einer gemeinsamen kombinierten rotatorischen sowie translatorischen Verstellbewegung sowohl parallel als auch senkrecht relativ zu der Aufnahmefläche verstellbar sind, **dadurch gekennzeichnet, daß** die Antriebsmittel mittels eines Kurbeltriebes (5) auf einen die ersten Vereinzelungselemente (2) tragenden Trägerschlitten (6) einwirkend ausgebildet und angeordnet sind, wobei der Trägerschlitten (6) an einer die zweiten Vereinzelungselemente (3) tragenden Trägerstruktur (10) parallel relativ zur Flächenerstreckung der Aufnahmefläche verstellbar gelagert ist, und wobei die Trägerstruktur (10) durch Betätigung der Antriebsmittel ausschließlich senkrecht relativ zur Aufnahmefläche verstellbar angeordnet und relativ zu einem Grundgestell (11) verschiebbar gelagert ist.

2. Vereinzelungsvorrichtung nach Anspruch 1,
**dadurch gekennzeichnet,**
**dass** die Antriebsmittel durch das Vorsehen einer entsprechenden Kulissenführung derart ausgebildet sind, dass die ersten Vereinzelungselemente (2) in einem letzten Vereinzelungs-Bewegungsschritt im Wesentlichen nur parallel zur Aufnahmefläche verstellbar sind, um die Kunststoffbehälter im Wesentlichen nur mit einer Kraft parallel zur Flächenerstreckung der Aufnahmefläche zu beaufschlagen.

3. Vereinzelungsvorrichtung nach einem der vorhergehenden Ansprüche,
dadurch gekenntzeichnet,
dass die Antriebsmittel und die Paare (P) von ersten und zweiten Vereinzelungselementen (2, 3) in einer Parkposition unterhalb der, vorzugsweise von einem Förderband gebildeten, Aufnahmefläche angeordnet sind.

4. Vereinzelungsvorrichtung nach einem der vorhergehenden Ansprüche,
**dadurch gekennzeichnet,**
**dass** den Kunststoffbehältern jeweils zwei Paare (P) von ersten und zweiten Vereinzelungselementen (2, 3) zuordenbar sind, wobei die
beiden Paare quer zur Längserstreckung der Aufnahmefläche, (L) beabstandet sind.

5. Vereinzelungsvorrichtung nach Anspruch 4,
**dadurch gekennzeichnet,**
**dass** die ersten Vereinzelungselemente (2) und/oder die zweiten Vereinzelungselemente (3) der beiden Paare (P) auf der gleichen Position in Richtung bezogen auf die Längserstreckung der Aufnahmefläche (L) angeordnet sind.

6. Vereinzelungsvorrichtung nach einem der vorhergehenden Ansprüche,
**dadurch gekennzeichnet,**
**dass** den ersten Vereinzelungselementen (2) ein, insbesondere über einen pneumatischen Rotationskolben antreibbarer, Kurbeltrieb (5) zugeordnet ist.

7. Vereinzelungsverfahren zum Vereinzeln von auf einer Aufnahmefläche in Reihe angeordneten Kunststoffbehältern unter Verwendung einer Vereinzelungsvorrichtung (1) nach einem der vorhergehenden Ansprüche, wobei eine Vielzahl von paarweise angeordneten ersten und zweiten Vereinzelungselementen (2, 3) vorgesehen werden und wobei die ersten Vereinzelungselementen (2) unterschiedlicher Paare relativ zu den zweiten Vereinzelungselementen (3) der Paare sowie in einer gemeinsamen kombinierten rotatorischen sowie translatorischen Verstellbewegung sowohl parallel als auch senkrecht relativ zu der Aufnahmefläche verstellt und im Zuge der Relativbewegung die Kunststoffbehälter entlang der Aufnahmefläche relativ zu einander verstellt und vereinzelt werden, wobei die ersten Vereinzelungselemente (2) bei Ihrer Verstellbewegung derart relativ zu den zweiten Vereinzelungselementen (3) parallel zur Flächenerstreckung der Aufnahmefläche verstellt werden, dass die Kunststoffbehälter mittels der ersten Vereinzelungselemente (2) gegen die dann ein Widerlager für die Kunststoffbehälter bildende zweiten Vereinzelungselemente (3) gefördert werden.

8. Vereinzelungsverfahren nach Anspruch 7,
**dadurch gekennzeichnet,**
**dass** die Kunststoffbehälter eine nicht rotationssymmetrische, vorzugsweise ovale, Innenumfangskontur aufweisen.

## Claims

1. A singulation device for the singulation of plastic containers that can be arranged in series on a reception surface, wherein a multiplicity of first and second singulation elements (2, 3), arranged in pairs, are provided, and wherein drive means are assigned to the first singulation elements (2) of the pairs (P), so as to move the first singulation elements (2) relative to the second singulation elements (3), so as to move the plastic containers relative to one another along the reception surface, and thereby to singulate them, wherein the drive means are designed such that with the latter, the first singulation elements (2) of different pairs (P) can be moved in a common combined rotational and translational adjustment movement both parallel and also at right angles relative to the reception surface,
**characterised in that**
the drive means are designed and arranged by means of a crank drive (5) operating on a support slide (6) supporting the first singulation elements (2), wherein the support slide (6) is mounted on a support structure (10) supporting the second singulation elements (3), which can be moved parallel relative to the areal extent of the reception surface, and wherein the support structure (10) is arranged such that it can be moved by actuation of the drive means exclusively at right angles relative to the reception surface, and is mounted such that it can slide relative to a base frame (11).

2. The singulation device in accordance with claim 1,
**characterised in that**
the drive means is designed by the provision of a corresponding slotted guide such that in a last singulation movement step the first singulation elements (2) can be moved essentially only parallel to the reception surface, so as to exert a force on the plastic containers that is essentially only parallel to the areal extent of the reception surface.

3. The singulation device in accordance with one of the preceding claims,
**characterised in that**
the drive means and the pairs (P) of first and second singulation elements (2, 3) are arranged in a parked position underneath the reception surface, which is preferably formed by a conveyor belt.

4. The singulation device in accordance with one of the preceding claims,
**characterised in that**
two pairs (P) of first and second singulation elements (2, 3) are assigned to the plastic containers in each case, wherein the two pairs are spaced apart transverse to the longitudinal extent of the reception surface (L).

5. The singulation device in accordance with claim 4,
**characterised in that**
the first singulation elements (2) and/or the second singulation elements (3) of the two pairs (P) are arranged at the same position in the direction with regard to the longitudinal extent of the reception surface (L).

6. The singulation device in accordance with one of the preceding claims,
**characterised in that**
a crank drive (5), which can, in particular, be driven via a pneumatic rotary piston, is assigned to the first singulation elements (2).

7. A singulation method for the singulation of plastic containers arranged in series on a reception surface, with the use of a singulation device (1) in accordance with one of the preceding claims, wherein a multiplicity of first and second singulation elements (2, 3) are provided, arranged in pairs, and wherein the first singulation elements (2) of different pairs are moved relative to the second singulation elements (3) of the pairs, and in a common combined rotational and translational adjustment movement both parallel and also at right angles relative to the reception surface, and in the course of the relative movement the plastic containers are moved and singulated relative to one another along the reception surface, wherein in the course of their adjustment movement the first singulation elements (2) are moved relative to the second singulation elements (3) parallel to the areal extent of the reception surface, such that the plastic containers are conveyed by means of the first singulation elements (2) against the second singulation elements (3), then forming an abutment for the plastic containers.

8. The singulation method in accordance with claim 7,
**characterised in that**
the plastic containers have a non-rotationally symmetrical, preferably oval, inner peripheral contour.

## Revendications

1. Dispositif de séparation pour séparer des récipients en plastique pouvant être disposés en rangée sur une surface de réception, une pluralité de premiers et de deuxièmes éléments de séparation (2, 3) disposés par paires étant prévus et des moyens d'entraînement étant associés aux premiers éléments de séparation (2) des paires (P) afin de déplacer les premiers éléments de séparation (2) par rapport aux deuxièmes éléments de séparation (3), afin de déplacer les récipients en plastique les uns par rapport aux autres le long de la surface de réception et de ce fait de les séparer, les moyens d'entraînement étant réalisés de telle sorte qu'ils permettent de déplacer les premiers éléments de séparation (2) de différentes paires (P) suivant un mouvement de réglage commun combiné rotatif et en translation à la fois en parallèle et perpendiculairement par rapport à la surface de réception,
**caractérisé en ce que**
les moyens d'entraînement sont réalisés et disposés de manière à agir au moyen d'un entraînement à manivelle (5) sur un chariot de support (6) portant les premiers éléments de séparation (2), le chariot de support (6) étant supporté de manière déplaçable sur une structure de support (10) portant les deuxièmes éléments de séparation (3) parallèlement à une étendue de surface de la surface de réception, et la structure de support (10) étant disposée de manière déplaçable exclusivement perpendiculairement par rapport à la surface de réception par actionnement des moyens d'entraînement et étant supportée de manière déplaçable par rapport à un bâti de base (11).

2. Dispositif de séparation selon la revendication 1,
**caractérisé en ce que**
les moyens d'entraînement sont réalisés en prévoyant un guide à coulisse correspondant de telle sorte que les premiers éléments de séparation (2) puissent être déplacés dans une dernière étape de déplacement de séparation essentiellement uniquement parallèlement à la surface de réception afin de solliciter les récipients en plastique essentiellement uniquement avec une force parallèlement à l'étendue de surface de la surface de réception.

3. Dispositif de séparation selon l'une quelconque des revendications précédentes,
**caractérisé en ce que**
les moyens d'entraînement et les paires (P) de premiers et deuxièmes éléments de séparation (2, 3) sont disposés dans une position de rangement en dessous de la surface de réception formée de préférence par une bande transporteuse.

4. Dispositif de séparation selon l'une quelconque des revendications précédentes,
**caractérisé en ce que**
à chaque fois deux paires (P) de premiers et de deuxièmes éléments de séparation (2, 3) peuvent être associées aux récipients en plastique, les deux paires pouvant être espacées transversalement à l'étendue longitudinale de la surface de réception (L).

5. Dispositif de séparation selon la revendication 4,
**caractérisé en ce que**
les premiers éléments de séparation (2) et/ou les deuxièmes éléments de séparation (3) des deux paires (P) sont disposés dans la même position dans la direction rapportée à l'étendue longitudinale de la surface de réception (L).

6. Dispositif de séparation selon l'une quelconque des revendications précédentes,
**caractérisé en ce qu'**
un entraînement à manivelle (5) pouvant notamment être entraîné par le biais d'un piston rotatif pneumatique est associé aux premiers éléments de séparation (2).

7. Procédé de séparation pour séparer des récipients en plastique disposés en rangée sur une surface de réception en utilisant un dispositif de séparation (1) selon l'une quelconque des revendications précédentes, une pluralité de premiers et de deuxièmes éléments de séparation (2, 3) disposés par paires étant prévus et les premiers éléments de séparation (2) de différentes paires étant déplacés par rapport aux deuxièmes éléments de séparation (3) des paires ainsi que dans un mouvement de déplacement commun combiné rotatif et en translation à la fois parallèlement et perpendiculairement par rapport à la surface de réception et au cours du mouvement relatif, les récipients en plastique étant déplacés les uns par rapport aux autres le long de la surface de réception et étant séparés, les premiers éléments de séparation (2), lors de leur mouvement de déplacement, étant déplacés par rapport aux deuxièmes éléments de séparation (3) parallèlement à l'étendue de surface de la surface de réception, de telle sorte que les récipients en plastique soient transportés au moyen des premiers éléments de séparation (2) contre les deuxièmes éléments de séparation (3) formant alors une butée pour les récipients en plastique.

8. Procédé de séparation selon la revendication 7,
**caractérisé en ce que**
les récipients en plastique présentent un contour périphérique interne sans symétrie de révolution, de préférence ovale.
